# EUROPEAN PATENT SPECIFICATION

(11) **EP 2 290 420 B1**
(45) Date of publication and mention of the grant of the patent: **27.07.2016**
(21) Application number: 09168979.4
(22) Date of filing: 28.08.2009
(51) Int. Cl.: G21K 1/06

(54) **Method for assembling a mirror plate stack**
Verfahren zum Aufbau eines Spiegelplattenstapels
Procédé d'assemblage d'une pile à plaque-miroir

(43) Date of publication of application: 02.03.2011
(60) Divisional application: 11163175.0
(73) Proprietor: EUROPEAN SPACE AGENCY, 75738 Paris Cedex 15 (FR)
(72) Inventor: Bavdaz, Marcos, 2200 AG Noordwijk (NL)
(74) Representative: MERH-IP Matias Erny Reichl Hoffmann Patentanwälte PartG mbB

(56) References cited:
- WO-A1-2007/003359
- US-A- 2 135 873
- US-A- 5 532 815
- US-A- 6 137 579
- US-A1- 2002 163 744
- US-A1- 2004 032 931
- US-A1- 2005 185 306
- US-A1- 2007 224 518
- US-B1- 7 077 532
- US-B1- 7 347 572
- Marco Beijersbergen ET AL: "Development of x-ray pore optics: novel high-resolution silicon millipore optics for XEUS and ultralow mass glass micropore optics for imaging and timing", Proceedings of SPIE, vol. 5539, 4 November 2004 (2004-11-04), pages 104-115, XP055228243, US ISSN: 0277-786X, DOI: 10.1117/12.552942 ISBN: 978-1-62841-839-2

## Description

The invention relates to a method for assembling a mirror plate stack comprising a plurality of mirror plates and a base plate onto which the plurality of mirror plates are stacked.

A particular, but non-exhaustive, application of the invention lies in space missions involving the observation of particular regions of space in the X-ray ranges or for high-energy particles using space telescopes that comprise optical modules based on stacked mirror plates. Nevertheless, the invention can be applied in numerous other fields: UV optics for lithographic equipment, medical diagnostic equipment, material testing and characterization equipment, imaging X-ray fluorescence analyzers, etc.

However, in order to be more concrete, the text below relates mainly to the preferred application of the invention, but without limiting its scope in any way thereto, i.e. it relates to an X-ray optical module, which integrates slumped glass mirror plates.

High precision X-ray optical units that require an optical diameter of several meters are usually not realized using a single large monolithic mirror shell due to manufacturing difficulties and the impractical large size. Instead, a plurality of mirror shells are typically azimuthally divided in small segments, which then have to be assembled into an exact and accurate, yet robust and rugged stack of mirror plates to realize the required resolution and measurement sensitivity of the optical unit.

The thickness of these mirrors plates is typically very small compared to the surface diameter; by way of example thin plates or coaxial shells with a surface area of a DIN A4 sheet and a thickness < 0.5 mm are used. This thickness (or thinness) requirement of the mirrors presents an opto-mechanical challenge in mounting them without compromising their figure for focusing since such a mirror plate deforms easily under its own weight and by any inadvertent handling or frictional forces. High-precision measurements with an angular resolution of a few arc seconds require that the thin mirrors are to be aligned and mounted with precision at a level of about a micrometer or a fraction thereof. Given that the typical baseline design of such mirrors has an axial length of ~ 200 mm, 1 micrometer error peak-to-valley in low order axial figure error, for example, in sag, results in an error of 2 arc-seconds in the mirror's axial slope, 4 arc-seconds in reflected rays, which is further compounded, in a double-reflection, with a similar error from the secondary mirror. The limit on the amplitude of figure distortion is even more stringent for errors of higher spatial frequency. These requirements are particularly challenging when stacking a plurality of mirror plates due to the potential compounding of errors during the stacking a plurality of mirror plates due to the potential compounding of errors during the stacking process. Various techniques have been proposed in the prior art in an attempt to satisfy the above-mentioned requirements. US 2003/0194054A1 describes a mirror assembly for medical application. US 6,449,826 B1 disclose a further method for assembling a mirror plate stack for space astronomy. By way of non-exhaustive example, mention can further be made of those described in the following documents, most of which require a temporary mounting structure for the mirror plate assembly: Zhang, W.W. et al. (Constellation-X Mirror Technology Development), 2007, Proc. SPIE, Vol. 6688. p. 668802), Chan et. al. (Opto-mechanics of the Constellation-X SXT Mirrors: Challenges in Mounting and Assembling the Mirror Segments), 2008, Proc. SPIE Vol. 7011, 701114) and Podgorski et. al. (A Mounting and Alignment Approach for constellation-X Mirror Segments) 2008, Proc. Of SPIE Vol. 7011, 701112-1. Further, US 2005/185306 A1 describes an optical reflector element for a beam of X-rays or of gamma-rays or of high-energy particles at grazing incidence, the element being constituted by a stack of superposed silicon plates.

Marco Beijersbergen ET AL: (Development of X-ray pore optics: novel high-resolution silicon millipore optics for XEUS and ultralow mass glass micropore optics for imaging and timing), 2004, Proceedings of SPIE, Vol. 5539, pages 104-115, discloses a method of producing X-ray optics, wherein the optics are made by stacking plates which are made from rectangular cuts of silicon wafers. This document discloses automated assembly facilities for the production of these stacks.

Initially flat sheets, e.g. made of glass, must be formed into the required shape. The flat glass sheets are placed onto a properly shaped mandrel, and then heated in an oven to the temperature, at which the glass sheet softens and bends under its own weight. The temperature is low enough for the glass sheets to keep their surface finish, but high enough for the sheets to conform to the shape of the supporting mandrel.

An alternative approach utilizes gas pressure for forming the glass plate. The glass plate is sandwiched between a set of two mandrels and air cushions are between the upper mandrel and the upper side of the glass plate and the lower side of the glass plate and the lower mandrel, respectively.

Once the mirror plates are formed, they are removed from the slumping mandrel by means of a separate handling tool in order to be inspected and measured, then aligned and mounted into the optical module or unit structure. Considering the flexibility of these thin mirror plates, it is rather difficult to achieve the required metrology accuracy of a few arc seconds and microns. Prior art methods employ a temporary mounting of the slumped mirror plates to perform the metrology. The temporary mounting of the mirror plates is followed by a final permanent mounting of the mirror plates. However, the temporary mounting equipment may cause additional distortions to the mirror plates. This temporary mounting equipment is also required for the handling of the mirror plate during the integration of the plate into the X-ray optical module.

In the prior art, in particular for making telescopes, several alternative approaches for the handling and alignment of the mirror plate pairs prior to the final integration into the optical module have been proposed. The main proposals are the following: in a so-called "passive" approach, the mirror plates are hold in position with minimal distortions during alignment and integration into the optics module. To minimize distortions under gravity, the plate is suspended on thin wires and then bonded on the back to a temporary structure. The assembly is then used to position and align the mirror plate to the optics module structure, where it is permanently bonded. The temporary bonds to the handling structure are finally broken to release the latter.

In another so-called "active alignment" approach, advantage is taken from the flexibility of the mirror plate, and out of roundness and focus adjustments are made by slightly deforming the mirror plate during the alignment. Bonding pins are first glued to the mirror plate, and these are then used to hold and position the mirror plate inside the optical module box. On-line metrology is used to measure the actual position of the plate. Once the optimal position is reached, the bonding clips are epoxied to the rails of the optical module box.

Both approaches require a box-like structure with rails to which the mirror plates are attached.

In total, a typical optical module might contain about 100 mirror pairs in e.g. a Wolter-1 configuration. A total of e.g. 60 of such modules form the complete telescope aperture. Such mirror pairs, e.g. two mirror plate stacks arranged in a tandem configuration for a Wolter-1 configuration, are usually assembled by pairwise mounting and aligning two corresponding mirrors, one of each mirror plate stacks, e.g. two mirror plate stacks are assembled in parallel.

Those prior art techniques summarized briefly above serve to satisfy the above-mentioned requirements in imperfect manner only. For example, after the slumping process, accurately placing the mirror plates onto a new separate handling tool is a difficult procedure, since the optical axis of a slumped mirror plate is hard to determine (due to the large radius of curvature and the long focal length of the plate). Additionally, a temporary mounting of the slumped mirror plates to perform the metrology followed by a final permanent mounting of the mirror plates is error-prone since the additional temporary mounting step results in additional distortions of the mirror plate under its own weight and by any inadvertent handling or frictional forces. Also, determining the plate position before the final alignment and bonding is completed does not allow for determining the final position of the mirror plates to a high degree of accuracy. Furthermore, the need for a box-like structure to fix the mirror plates during the stacking procedure does not allow for an accurate measurement of the entire figure and position of the aligned mirror plate since part of the mirror plate figure or surface are covered by the box-like mounting structure.

Furthermore, due to the difficulties of the current approaches for stacking the mirror plates, two corresponding mirror plate stacks, i.e. two mirror plate stacks later to be combined into an optical unit such as a Wolter-1 configuration, are assembled in parallel by pairwise mounting and aligning two corresponding mirrors of each mirror plate stacks. However, the critical alignment between the two mirror plate stacks can therefore only be conducted at the time of stacking, using only visible optical metrology which makes it difficult to accurately align the two mirror plate stack relative to each other. It is a further disadvantage in some prior art methods that only a small fraction of the mirror is sampled and accessible to metrology during the alignment since the mirror area that is exposed via the slots of the conventional handling tools are limited.

Therefore there is a need to solve the above mentioned issues by providing a method for assembling mirror plates to form a mirror plate stack with higher accuracy and by providing a method for aligning and assembling two or more mirror plate stacks into an optical unit with higher accuracy.

In view of the above problems of the prior art, it is an object of the invention to provide a method of higher accuracy for assembling a mirror plate stack comprising a plurality of mirror plates and a base plate onto which the plurality of mirror plates are stacked. It is a further object of the invention to provide a method of higher accuracy for assembling an optical unit comprising at least two optical mirror plate stacks.

These objects are accomplished by the subject-matter according to the method of the independent claim. The dependent claims refer to preferred embodiments of the invention.

According to an aspect of the invention, a method for assembling a mirror plate stack comprising a plurality of mirror plates and a rigid base plate onto which the plurality of mirror plates are stacked is proposed. The plates, including the base plate, i.e. the plate at what is called the "bottom" or the "top" of the stack, can be shaped in such a manner that the front reflecting faces thereof have a well-determined shape. In other words, the mirror plates may have a light curvature and/or the shape of coaxial shells. The method comprises the steps of providing a base plate to which mirror plates are mounted. The base plate serves as a rigid carrier plate or structural substrate onto which the mirror plates are assembled. By way of example, the mirror plates may be glass mirror plates but the present invention is not restricted thereto. The mirror plates could equally well be, for example, silicon, metal, metal alloys, ceramics, or glass-ceramics mirror plates. The method further comprises the step of providing a handling tool with a second mirror plate. The method further comprises the step of providing a spacer to a first surface of the second mirror plate. Preferably, the spacer is formed as spacer ribs. The ribs may constitute integral portions of the plates or they may be made separately.

The method further comprises the step of positioning the handling tool comprising the second mirror plate with the spacer to align the second mirror plate with the first mirror plate, wherein the second mirror plate is aligned relative to the first mirror plate based on a measured position and shape of the first mirror plate to compensate a deviation of the measured position and shape of the first mirror platefrom a pre-defined position and shape of the first mirror plate. In other words, after a n^{th} mirror plate has been mounted, its position and shape is measured to determine any deviation from a pre-defined position on the plate stack and shape of the n^{th} mirror plate.The mirror plate shape may comprise the plate geometry and figure. The measured position and shape of the n mirror plate may then be used for the subsequent positioning and mounting of the following (n+1)^{th} mirror plate to compensate the measured errors or deviation of the position and shape of the preceding n^{th} plate. Thus, by using the metrology data acquired on the preceding plate when positioning and aligning the following plate, an accumulation of errors in the stacking process is avoided.

The method further comprises the step of attaching the second mirror plate to the first mirror plate by bonding the spacer to the first mirror plate, wherein the spacer determines a pre-defined distance between the first and the second mirror plates. The method further comprises the step of exposing a second surface of the second mirror plate by removing the handling tool from the attached second mirror plate. The method further comprises the step of measuring the position and shape of the attached second mirror plate after the second surface of the second mirror plate has been exposed. The first surface of the second mirror plate comprises the spacer and is facing the preceding plate and mounted thereto, whereas the second surface of the second mirror is fully exposed and accessible for metrology after the handling tool has been removed.

It is advantageous, that the actual plate position and shape is determined after the alignment and bonding is completed, thus preventing mirror plate measurements from being distorted by further mounting procedures in case a temporary mounting was used. The final position and shape of the mounted mirror plates can therefore be measured more accurately.

Since no box-like mounting structure is used, the complete surface of the mirror plate that has been mounted to the preceding plate is exposed and accessible for measurement, preferably using optical metrology or profilometers to accurately measure the position and shape of the mirror plate. The measured position and shape of a mirror plate may be used for the subsequent positioning of the following plate to compensate any deviation from a pre-determined position and shape of the assembled second mirror plate.

According to the above, the mounting of a mirror plate to a preceding mirror plate is described, wherein the preceding mirror plate has been already mounted. According to another aspect of the invention, these steps may be repeated to stack a plurality of mirror plates onto the base plate so that at least a third mirror plate is attached to the second mirror plate. By way of example, a mirror plate stack may comprise 20 to 30 mirror plates.

For assembling a first mirror plate directly to the base plate, the method may further include the following steps: providing the base plate; providing the handling tool with the first mirror plate; providing a spacer to a first surface of the first mirror plate; positioning the handling tool comprising the first mirror plate with the spacer for aligning the first mirror plate with the base plate; attaching the first mirror plate to the base plate by bonding the spacer to the base plate; exposing a second surface of the first mirror plate by removing the handling tool from the attached first mirror plate; and measuring the position and shape of the first mirror plate after the second surface has been exposed.

In other words, the assembly of the first mirror plate onto the base plate differs from the assembly of a subsequent mirror plate mainly in that the first mirror plate is aligned relative to the base plate itself and mounted directly thereon.

According to another aspect of the invention, the thickness of the mirror plates is small compared to the mirror area and may be 1 mm or less at a given mirror surface area of, for example, 300 cm².

Rib spacing is to be chosen according to the required angle, resolution, material properties and dimensions.

Preferably, the mirror plates are aligned by means of mechanical and optical alignment methods that utilize reference items provided on the handling tool and the base plate. The mechanical and optical alignment methods do achieve the required accuracy. Typically, the size is in the order of 1 arc second and 1 micron.

By way of example, the reference items may be optical mirrors for a precise angular measurement or surface marks for mechanical/ tactile scanning. These reference items may also be used for the above-mentioned step of measuring the position and shape of the attached second mirror plate after the second surface of the second mirror plate has been exposed.

According to another aspect of the invention, the base plate onto which the mirror plates have been stacked may be used as a carrier plate for interfacing the mirror plate stack with an optical bench. It is advantageous that the base plate or "backplane" is not only designed and used as a temporary tool during stacking only, but the optical module baseplate used during the stacking process itself can also be retained and used as a structural element to later interface the mirror plate assembly to an optical bench or to another mirror plate stack. In other words, the bonding of all mirror plates during the integration process, including the first one attached directly to the base plate, is permanent. It is therefore an advantage of the present invention that only one precision base plate is required. It is a further advantage of the invention that the plates are automatically aligned to the optical module structural interfaces upon completion of the plate integration. The above-mentioned advantages are of particular importance for large systems comprising a plurality of mirror plate stacks. The savings in the production of precision parts and in alignment processes are significant.

According to another aspect of the invention, in the step of measuring the position and shape of the attached mirror plate after the second surface has been exposed, the position and shape may be measured using metrology or profilometers. Preferably, the optical methods to measure the position and shape include Computer generated holography and interferometry. The position and shape may be measured to the required accuracy, preferably as less than 1 arc second and less than 1 micron.

According to the invention, the handling tool is a mandrel, and the method may further comprise the step of forming and/or fabricating the mirror plate to a pre-defined shape by means of the mandrel. Depending on the plate material, various types of mandrels exist for slumping, electro-forming or fabricating the plate to a pre-defined shape. According to another aspect of the invention, the mirror plates may also be obtained by electroforming. According to another aspect of the invention, the mirror plates may be glass mirror plates and the mandrel may be a glass slumping mandrel. In other words, the initially flat mirror sheets, e.g. made of glass, are formed into the required shape by placing them on a properly shaped mandrel. The mandrel and the mirror sheet are then heated in an oven to the temperature, at which the sheet softens and bends under its own weight. The temperature is low enough for the sheets to keep their surface finish, but high enough for the sheets to conform to the shape of the supporting mandrel.

Using the same tool for forming the initially flat mirror sheets into the pre-determined form as well as for positioning and aligning the formed mirror plate with the base plate and/ or a preceding mirror plate already mounted into the plate stack, allows to increase the stacking accuracy and to reduce costs. After the slumping process, the formed mirror plate is already precisely aligned on the handling tool. The optical axis of the handling tool (being the mandrel for forming the mirror plate) is known to large accuracy, and therefore also for the mirror plate. By positioning and aligning the formed mirror plates directly by means of the mandrel avoids additional distortions and the handling errors that would result from moving the formed mirror plate to another handling tool. By way of example, an additional handling procedure, such as suspending the plate on thin wires and bonding it to a temporary structure or gluing bonding clips to the mirror plate to position the mirror plate can be avoided which could distort the thin mirror plates by any inadvertent handling or simply by the mirror plate's own weight.

It is also possible to use glass plates formed by slumping in a gas flow between mandrels, according to the above mentioned approach of the prior art, for example. In this case the glass plate has to be positioned onto the handling tool.

According to another aspect of the invention, the method may further comprise the step of removably attaching the second surface of the mirror plate to the handling tool by means of a separation layer wherein a sticking coefficient of the separation layer is set to a value to hold the mirror plate in a fixed position during the step of positioning the handling tool comprising the mirror plate with the spacer means, and wherein after the step of attaching the mirror plate, the value of the sticking coefficient allows a removal of the handling tool from the attached mirror plate.

Preferably, the base plate and/or the spacer means are made of the same material as the mirror plate material. This ensures that all the components of the mirror plate stack have the same coefficient of thermal expansion (CTE) and the same optical properties. Alternatively, the base plate and the spacer may be made of a material with a coefficient of thermal expansion (CTE) that is within acceptable limits for the given thermal environment during production and operation.

According to the invention, a method for assembling a mirror plate stack comprising a plurality of mirror plates and a base plate onto which the plurality of mirror plates are stacked is proposed, comprising the steps of placing a first mirror plate onto a mandrel; forming the first mirror plate to a pre-defined shape by means of the mandrel; attaching a spacer to a first surface of the formed first mirror plate; and using the mandrel to align the formed first mirror plate with the base plate or a mirror plate mounted thereto.

According to an example being useful for the understanding of the invention, a method for assembling an optical unit is proposed, said optical unit having a first optical mirror plate stack and a second optical mirror plate stack, wherein said first mirror plate stack and said second optical mirror plate stack comprising a plurality of mirror plates stacked onto a base plate. The method comprises the steps of mounting the first optical mirror plate stack and the second optical mirror plate stack via their base plates onto micro-manipulator means wherein the first and the second optical mirror plate stacks are placed in tandem, i.e. are arranged into a tandem configuration and wherein the first and the second optical mirror plate stacks can be positioned relative to each other by the micro-manipulator means. The method comprises the steps of aligning the first optical mirror plate stack relative to the second optical mirror plate stack by means of X-ray metrology.

The alignment between the first and the second mirror plate stack is conducted using X-ray metrology, wherein the actual optical performance and imaging properties of the complete system comprising the two mirror plate stacks is measured in X-rays which allows to accurately align the two stacks with respect to each other using micro-positioners holding the two plate stacks at their base plates. The alignment method intrinsically considers all the mirror plates simultaneously, and performs a direct measurement to high accuracy and fidelity. According to conventional methods, this critical alignment between the mirror plates of the first stack and the mirror plates of the second stack is conducted at the time of stacking, using visible optical metrology. This implies some potential error sources: Firstly, X-ray metrology is not possible and therefore the inferior (due to diffraction limitations) visible light metrology must be employed. Secondly, only a small fraction of the mirror is sampled and accessible to the metrology (limited to the area exposed in the slots of handling tool). Thirdly, after the stacking, in the prior art several further steps are required until the mirror plates are permanently mounted to the optical module structure, with no further possibility to re-align the mirror plates. The X-ray metrology experiment is possible, but not necessarily required. If adequate, conventional optical and tactile methods may be applied.

According to another example , the method may further comprise the steps of securing the aligned position of the first optical mirror plate stack relative to the second optical mirror plate stack by connecting the first mirror plate stack and the second mirror plate stack via their base plates. Further, the joint base plates may contain also the interface for the attachment to an optical bench, for example, using isostatic mounting.

According to another example, the first mirror plate stack may be a mirror plate stack of parabolically shaped glass mirror plates and the second mirror plate stack may be a mirror plate stack of hyperbolically shaped glass mirror plates forming a Wolter-1 element. In other words, the two stacks placed in tandem are combining surfaces of revolution that are of parabolic and hyperbolic shape. It is a further advantage of the invention, that the alignment method, by intrinsically considering all the mirror plates simultaneously, performs a direct measurement of the most critical kink angle, i.e. the angle between the parabola and hyperbola to high accuracy and fidelity.

From the above, it can readily be understood that the invention achieves the objects it set out to achieve. In particular, and without repeating all its advantages, it makes it possible to reduce considerably the overall manufacturing costs for a mirror plate assembly while significantly improving the accuracy for assembling the mirror plate stack.

This makes it possible to make telescopes of higher accuracy but without any corresponding excessive increase in costs. The above described mirror plate assembly method is in particular suitable for assembling mirror plate stacks for use in high-performance X-ray optics, e.g. to assemble a glass X-ray optical unit. The present invention, however, is not restricted thereto. The invention finds applications in numerous other fields. Mirror plate stacks and optical units assembled according to this invention may also be used for high-precision UV optics for lithographic equipment, for medical diagnostic equipment, material testing and characterization equipment, or imaging X-ray fluorescence analyzers.

The above-described method for assembling an optical unit having a first optical mirror plate stack and a second optical mirror plate stack is not restricted to the assembly of Wolter telescope of type 1, i.e. the first mirror plate stack having parabolically shaped glass mirror plates and the second mirror plate stack having hyperbolically shaped glass mirror plates but is also applicable for the assembly of Wolter-2, Kirkpatrick-Baez geometries or other configurations based on the alignment of at least two mirror plate stacks positioned relative to each other.

A single stack of a multitude of plates can also be produced, as described. This could be used for point-to-point imaging and flux concentrations or collimators and utilized for lithography equipment, for example.

Finally, the numerical values given and the examples of suitable materials are provided merely by way of concrete example and do not constitute any kind of limitation on the scope of invention. They are technological selections within the competence of the person skilled in the art.

The invention is explained below in an exemplary manner with reference to the accompanying drawings, wherein
Fig. 1 shows a flow diagram of steps involved in assembling a mirror plate stack according to an embodiment of the invention;
Fig. 2 shows a flow diagram of steps involved in assembling an optical unit based on two mirror plate stacks arranged in a tandem configuration according to an example being useful for the understanding of the invention;
Figs. 3a and 3b illustrates a slumping mandrel and a mirror plate before and after a slumping process;
Fig. 4 illustrates a slumped mirror plate with attached spacer ribs on a slumping mandrel according to an embodiment of the invention;
Fig. 5a illustrates the positioning of the slumping mandrel comprising a mirror plate with attached spacer ribs for aligning the mirror plate with a base plate according to an embodiment of the invention;
Fig. 5b illustrates the alignment of a mirror plate with the base plate by means of optical and mechanical alignment methods utilizing reference items on the slumping mandrel and the base plate according to an embodiment of the invention;
Fig. 6 illustrates a based plate comprising a mounted mirror plate and a slumping mandrel that has been removed from the mounted mirror plate according to an embodiment of the invention;
Fig. 7 illustrates the measurement of the position and figure of an exposed surface of a mounted mirror plate according to an embodiment of the invention;
Fig. 8 illustrates the mounting of a second mirror plate to a first mirror plate already mounted to a base plate according to an embodiment of the invention;
Fig. 9 illustrates an assembled mirror plate stack according to an embodiment of the invention;
Fig. 10 illustrates the forming of a Wolter-1 element by aligning two mirror plate stacks using X-ray metrology, according to an example being useful for the understanding of the invention; and
Fig. 11 illustrates an optical unit comprising two mirror plate stacks and interface means for later integration into a telescope system according to an example.

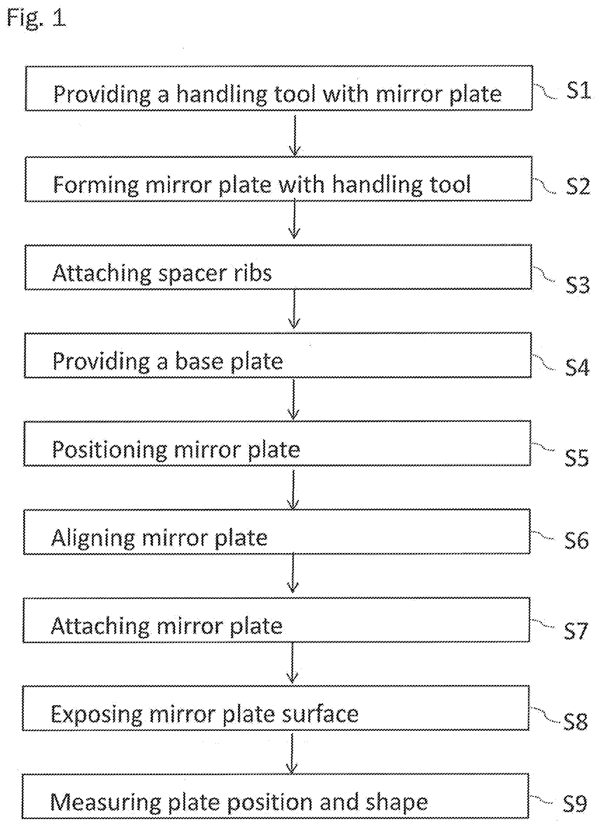

Fig. 1 shows a flow diagram of steps involved in assembling a mirror plate stack according to an embodiment of the invention.

In step S1, a handling tool is provided with a mirror plate positioned thereon. According to a first embodiment, the mirror plate is a glass mirror plate and the handling tool is a glass slumping mandrel. In step S2, the glass mirror plate is formed to a pre-defined shape by the glass slumping mandrel. In step S3, while the formed mirror plate is still positioned on the slumping mandrel after the slumping process, spacer ribs are attached to the mirror plate surface. According to this embodiment, the steps S4 -S7 describe the case where at least one mirror plate has already been assembled to a base plate. In step S4, a base plate is provided with a mirror plate mounted thereto. In step S5, the handling tool, i.e. the slumping mandrel, comprising the mirror plate with the spacer is positioned to align the mirror plate with the mirror plate that has been lastly mounted to the base plate. In step S6, the mirror plate is aligned relative to the already mounted mirror plate based on a measured position and shape of the mounted mirror plate to compensate a deviation of the measured position and shape of the mounted mirror plate from a pre-defined position and shape of the mounted mirror plate.

In step S7, the mirror plate that is still positioned on the handling tool, is attached to the mounted mirror plate by bonding the spacer ribs to the mounted mirror plate, wherein the spacer ribs determine a pre-defined spacing between the two mirror plates. In step S8, the handling tool is removed from the attached second mirror plate and thereby exposes the mirror plate surface that was in contact with the handling tool. In step S9, the position and shape of the attached mirror plate is measured after its surface has been exposed.

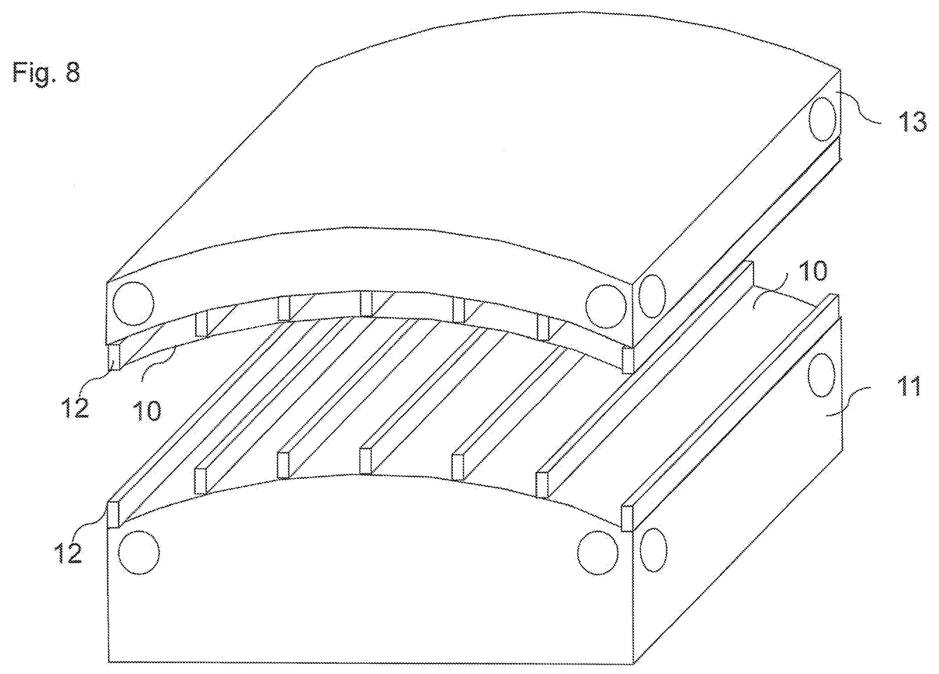

The steps illustrated in Fig. 1 describe the assembly of two successive plates 10. This stack structure as described in Fig. 1 and in Fig. 8 constitutes an optical reflector element in accordance with the invention that can be referred to as being "minimal". In fact, and as described below, the number of stacked plates is generally much greater, typically being of the order of a few tens. By way of concrete example, 20 to 30 plates are stacked one on another. The above-described steps S1-S9 are therefore repeated to stack a plurality of mirror plates onto the base plate.

For mounting the first mirror plate directly onto the base plate, instead of the above-described steps S4 to S7, the first mirror plate is assembled according to the following steps: the base plate is provided; the handling tool comprising the first mirror plate with the spacer ribs is positioned for aligning the first mirror plate with the base plate. Then, the first mirror plate is attached to the base plate by bonding the spacer ribs to the base plate. The attached first mirror plate is then measured according to steps S8 and S9. The above-described sequence of steps S1 to S3 and S4 to S9 may be conducted independent from each other. In other words, using the slumping mandrel onto which the mirror plate was formed to a pre-determined shape as the handling tool for the subsequent positioning and alignment of the mirror plate (steps S1 to S3) may also be used with another method for mounting the mirror plate into a mirror plate assembly. Likewise, aligning and mounting a mirror plate into a mirror plate assembly based on the measured position and shape of a previous mirror plate does not require the use of a mandrel as the handling tool. However, the combination of both approaches results in an assembly method of higher accuracy since a mandrel is particularly suitable for accurately positioning a mirror plate relative to a preceding mirror plate already mounted into the mirror plate assembly.

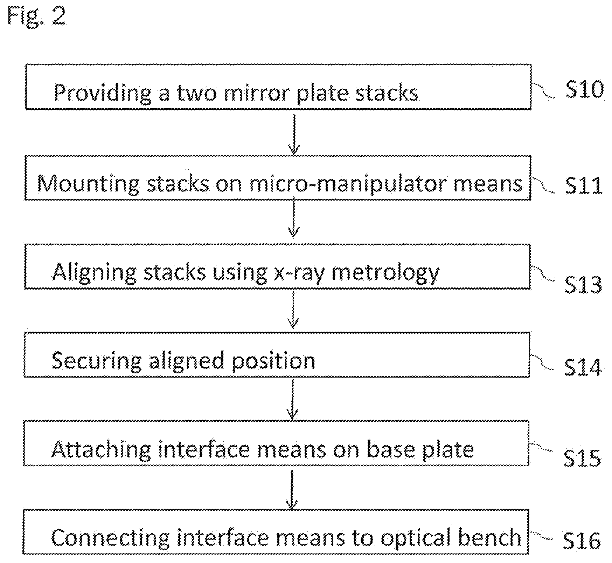

Fig. 2 shows a flow diagram of steps involved in assembling an optical unit based on two mirror plate stacks arranged in a tandem configuration according to an example being useful for the understanding of the invention. In step S10, two mirror plate stacks assembled according to the method of this invention are provided. According to an example, the first mirror plate stack comprises parabolically shaped glass mirror plates and the second mirror plate stack comprises hyperbolically shaped glass mirror plates. In step S11, the first optical mirror plate stack and the second optical mirror plate stack are mounted via their base plates onto micro-manipulator means wherein the first and the second optical mirror plate stacks are arranged into a tandem configuration and wherein the first and the second optical mirror plate stacks are positioned relative to each other by the micro-manipulator means. In step S13, the first optical mirror plate stack is aligned relative to the second optical mirror plate stack by means of X-ray metrology. In step S14, the the aligned position of the first optical mirror plate stack relative to the second optical mirror plate stack is secured by connecting the first mirror plate stack and the second mirror plate stack via their base plates. In step S15, interface means are attached to the connected base plates of the first and second optical mirror plate stack. In step S16, the interface means are connected by means of isostatic mounting interfaces to an optical bench.

In practice, the interface means may also be part of the base plates themselves avoiding distortions and errors during a later integration.

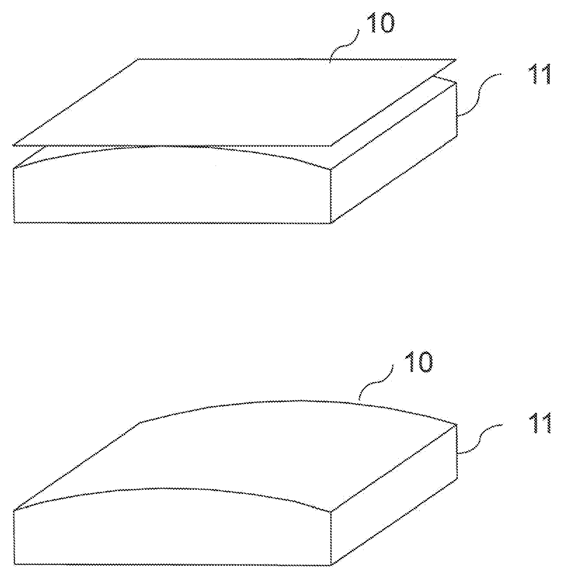

The following description based on Figs. 3a to 11 describes the above steps in more detail.

In the steps shown in Figs. 3A and 3B, the slumping process is illustrated. Fig. 3A shows schematically a slumping mandrel 11 and a mirror plate 10 before a slumping process. The technique of glass slumping is based on the fact that the viscosity of glass changes with temperature. By increasing the temperature above the strain point it becomes soft enough to deform under its own gravity and slumps into a given mould. The starting mirror plates 10 are display glass sheets, e.g. of type D 263 T produced by Schott. The selected glass sheets are typically the size of an A4 sheet, and between 0.3 and 0.5 mm thick. These sheets are flat, and must be formed into the required shape. The flat glass sheet 10 is placed onto a properly shaped slumping mandrel 11 and then heated in an oven to the temperature at which the glass sheet softens and bends under its own weight. The temperature is low enough for the glass sheets to keep their surface finish, but high enough for the sheets to conform to the shape of the supporting mandrel 11. Generally, a separation agent is required between the glass sheet 10 and the mandrel 11 to avoid sticking. To obtain the required X-ray reflectivity, grazing incidence angles and high-Z material coatings (e.g. Pt, Ir or Au) are used.

Fig 3b shows the mirror plate 10 after the slumping process where the glass mirror plates 10 has been shaped into a pre-defined form as defined by the slumping mandrel 11. The plates 10 can be curved so that the reflecting front faces occupy a surface of predetermined shape, for example, a surface of revolution that may be parabolic, elliptical, or hyperbolic. The shape can be convex or concave.

After the slumping process, the mirror plates 10 can be made to lightly stick to the mandrel 11, by fine-tuning the separation layer composition and preparation process used to form it. In other words, the sticking coefficient of the separation agent between the glass sheet 10 and the mandrel 11 is set to a value that is strong enough to hold the mirror plate in a fixed position on the mandrel during a subsequent positioning process of the mandrel, but also light enough so that the mirror plate can be removed from the mandrel after the mirror plate has been mounted into the mirror plate stack.

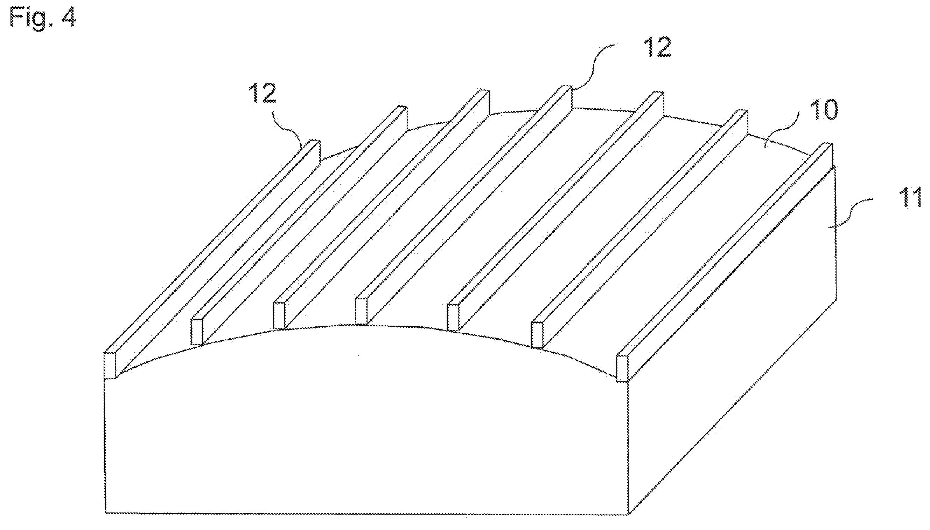

During the step shown in Fig. 4, spacer ribs 12 are attached to the slumped mirror plate 10 on a slumping mandrel 11. The ribs 12 are attached to the back of the plate when it is still on the slumping mandrel. The spacer ribs 12 are glued to the mirror plate surface so that the spacer ribs are regularly spaced apart. The ribs 12 are of the same material as the mirror plates.

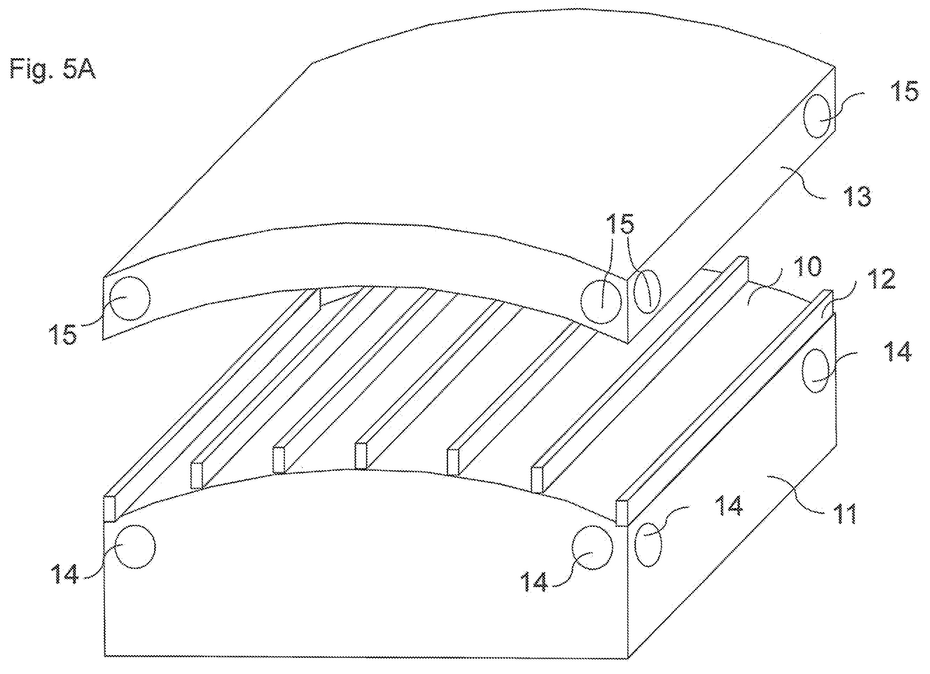

Fig. 5a illustrates the step of positioning of the slumping mandrel 11 comprising a mirror plate 10 with attached spacer ribs 12 for aligning the mirror plate 10 with a base plate 13. The slumping mandrel 11 serves as the handling tool for stacking the slumped mirror plate 10 into a mirror plate stack. The mandrel 11 with the lightly attached mirror plate 10 is positioned with respect to a base plate 13.

Due to the slumping process, the mirror plate 10 is already aligned on the handling tool 11, since this is the actual mandrel used to slump the plate 10 in the previous production step. The optical axis of the handling tool being the slumping mandrel 11 is known to large accuracy, and therefore also the optical axis for the mirror plate 10.
By using the mandrel 11 as the handling tool for mounting the mirror plate 10 into the mirror plate stack, an additional difficult alignment procedure which would require moving the slumped mirror plate from the mandrel 11 onto another handling tool can be avoided. Such a procedure would be error-prone since the optical axis of the plate is hard to determine due to the large radius of curvature and the long focal length of the plate.

The tuning of the sticking coefficient of the separation layer (not shown) ensures that the mirror plate adheres sufficiently to the mandrel after the slumping process, allowing the required later handling. At the same time the adhesion is light enough to permit separation from the mandrel at the required stage. Consequently, no further separate precision tool is necessary for positioning and aligning the slumped mirror plate 10, other than the slumping mandrel 11.

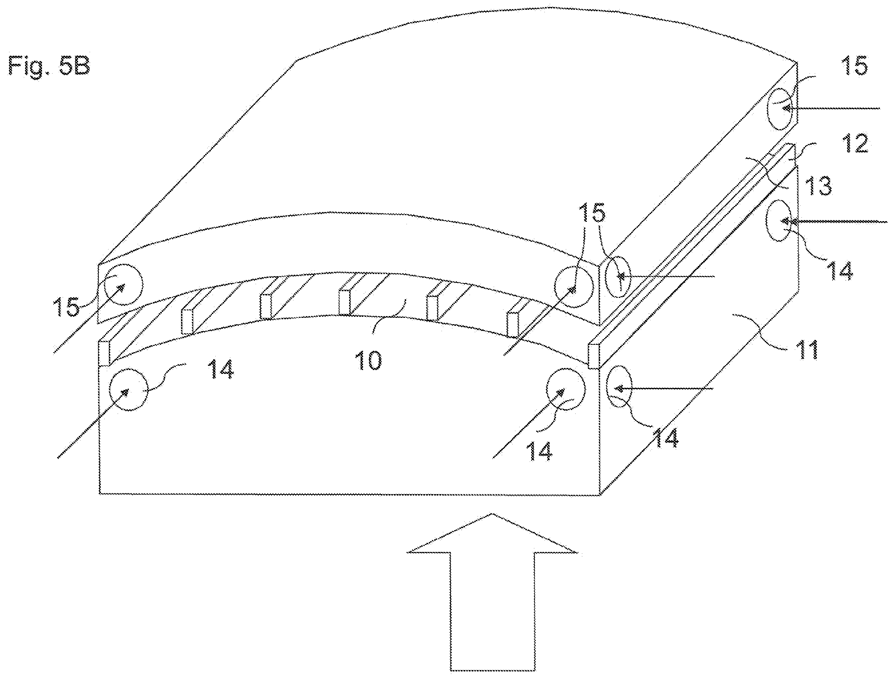

In step illustrated in Fig. 5b, the use of mechanical and optical alignment methods is illustrated indicated by the arrows in Fig. 5b. According to the invention, reference items (14, 15) on the handling tool (i.e. the slumping mandrel) and the base plate are used. Optical references, such as optical mirrors are used as the reference items. Since the geometry of the mandrel 11 and the base plate 13 is known to a large degree of accuracy, the optical mirrors can be fixed on an exact position with respect to the mandrel and the base plate. Optical references 14 are fixed on two adjacent sides of the handling tool below the surface area on which the mirror plate is positioned. Additional optical references 15 are fixed on the corresponding positions of the handling tool. The arrows in Fig. 5b indicate, for example, laser beams which are reflected by the optical mirrors during the alignment process of the handling tool. Using these reference items, the position of the mandrel relative to the base plate or the already assembled reference plates can be determined with the required accuracy, which may be 1 micrometer example given.

As a consequence, no groves are required in the handling tool and the original slumping mandrel can be used. By using reference items according to the invention, the metrology is not limited by the diffraction of limited small beam reflections though narrow channels (as it is the case in conventional stacking methods).

Once the mirror plate 10 is in the correct position and properly aligned with the base plate 11, as determined by the conventional metrology systems, the spacer ribs 12 are bonded to the base plate 13, or the preceding mirror plate 10 that was stacked in the previous step. A spacing between two successive plates is determined by the spacer ribs 12. Once the bond is cured, the handling tool 11 is separated from the mirror plate 10. The bonding material (e.g. glue or cement) is used to bridge any gaps. The figure of the mirror plate 10 is largely defined by the figure of the mandrel 11. Thus, the mirror plate figure is maintained by the handling tool 11, from the time the plate is thermally slumped to conform to the mandrel 11, and up to the time when the plate 10 is firmly and permanently bonded to the structural support or the previous plate.

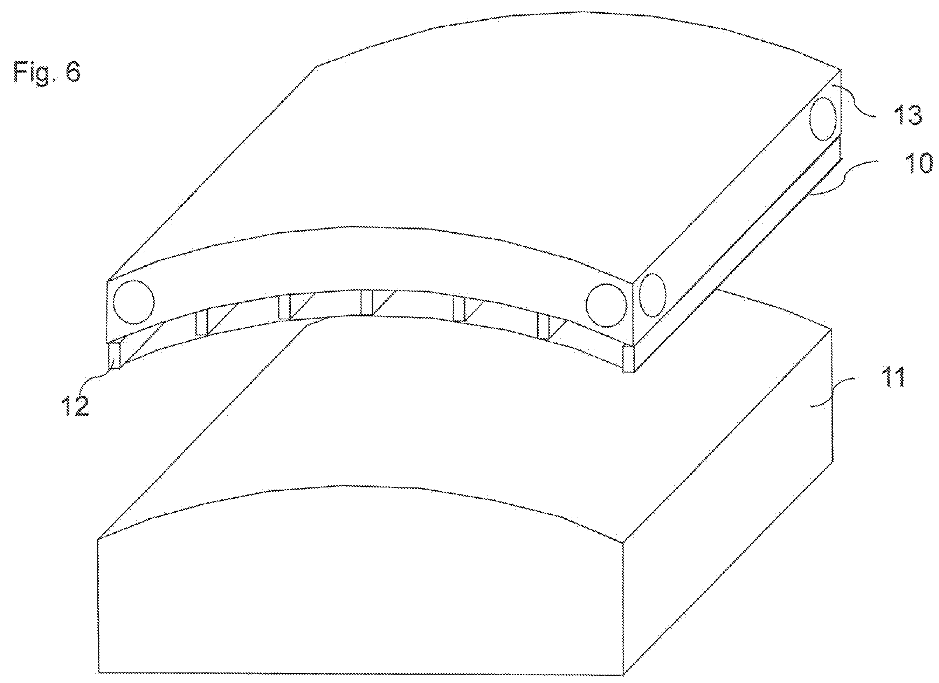

Fig. 6 illustrates a based plate comprising a mounted mirror plate and a slumping mandrel that has been removed from the mounted mirror plate 10, i.e., after the mirror plate 10 has been mounted. After the removal of the handling tool, the mirror surface previously facing the handling tool is fully exposed and available for metrology based on optical imaging or scanning methods, e.g. using computer generated holography (CGH) and interferometry. It is advantageous that the mirror surface is fully exposed and is not partly covered by an optical module box or a temporary mounting structure which would prevent an exact measurement of an entire mirror surface or figure.

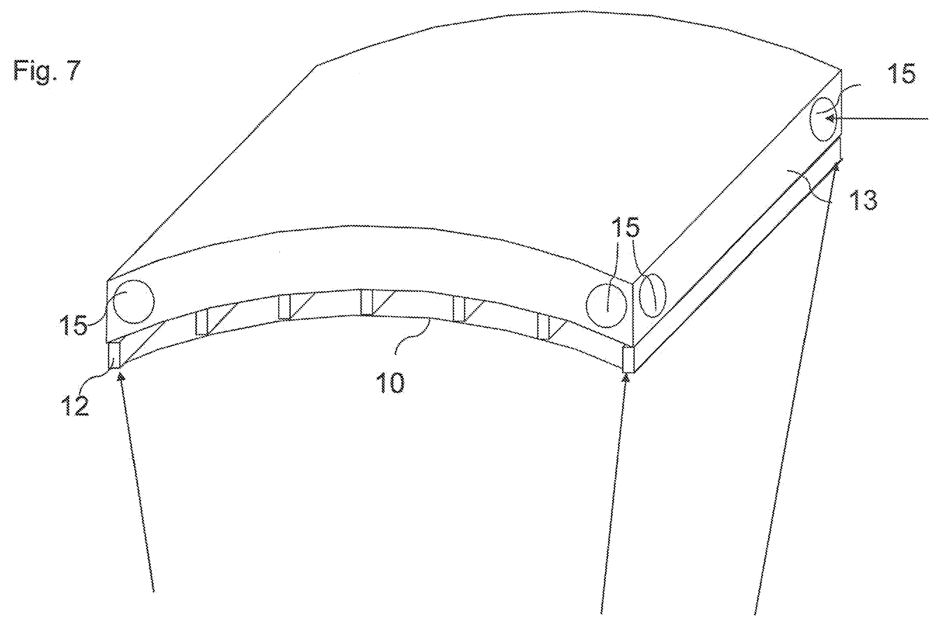

In the step shown in Fig. 7, the position, topography and figure of an exposed surface of a mounted mirror plate according to an embodiment of the invention is measured. The topography can also be measured by another test method. During this measurement step, the actual mounting position of the mirror plate and any figure errors are accurately determined and recorded. The optical references 15 that have been used as reference items to position and align a mirror plate with the base plate and/or a mirror plate already mounted on the mirror plate stack are also used for measuring the position and shape of the attached mirror plate after the surface of the mirror plate that was facing the mandrel has been exposed by removing the mandrel. The difference between the desired position and figure and the actual position and figure of the mounted mirror plate determines the position and figure errors. These errors can result from the slumping process or can occur during integration of the mirror where the assembly can generate small errors of angle and small local deformations of the mirror. Based on the determined errors, an optimal position of the successive mirror plate to be mounted during the following assembly step is calculated so that the position of the successive mirror plate compensates the measured error of the previous plate. In other words, with this step the inevitable errors in positioning the preceding or previous plate (n^{th} plate) are compensated when integrating the following plate ((n+1)^{th} plate), i.e. the accumulation of errors in the stacking process involving many mirror plates 10 is avoided. Thus, the integration error budgets will ensure that the deviations are within tolerances for each individual plate integration.

During the step illustrated in Fig. 8, the mounting and alignment process is repeated with the next plate to be mounted onto the mirror plate stack which shows the mounting of a mirror plate 10 to another mirror plate 10 already mounted to a base plate 13.

The next mirror plate 10 is slumped on a mandrel 11, spacer ribs 12 are attached to the mirror surface that is not in contact with the mandrel surface, and then the mirror plate 10 is properly aligned with the previous plate 10, aligned and bonded. A key element is that any errors determined in the previous step (integration of n^{th} mirror plate) are considered and corrected when the following (n+1)^{th} mirror plate is mounted.

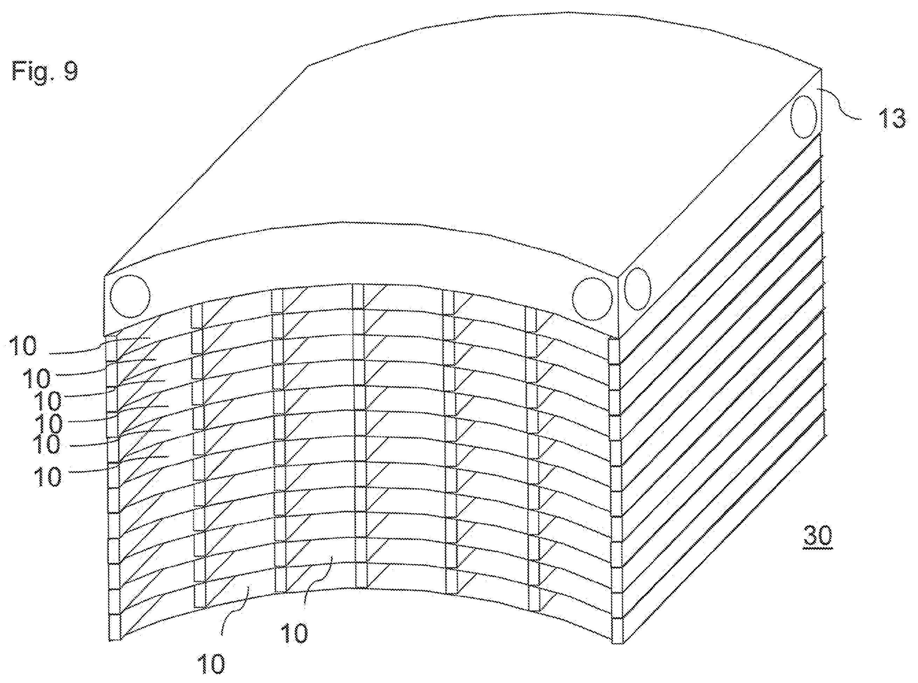

The process is repeated until the required number of plates is stacked and the mirror plate stack 30 is fully assembled, as illustrated in Fig. 9. The base plate or structural substrate 13, onto which the plates 10 have been stacked, is retained and used as the carrier plate for the optical module used to later to interface the mirror plate stack 30 to the optical bench. The bonding of all plates during the integration process, including the first one, is permanent. As a result, two positive effects are gained: Firstly, only one precision part is required (the optical module back plate 13) in contrast to conventional assembly approaches which require two different precision parts, i.e. the backplane and the optical module structural box. Secondly, the plates 10 are automatically aligned to the optical module structural interfaces upon completion of the plate integration. In prior art, the completed plate stack has to be removed from the tool, and then integrated with accuracy into a structural box. These advantages will be of particular importance for large telescope systems requiring a large number of optical units to be used. The savings in the production of precision parts and in alignment processes is significant.

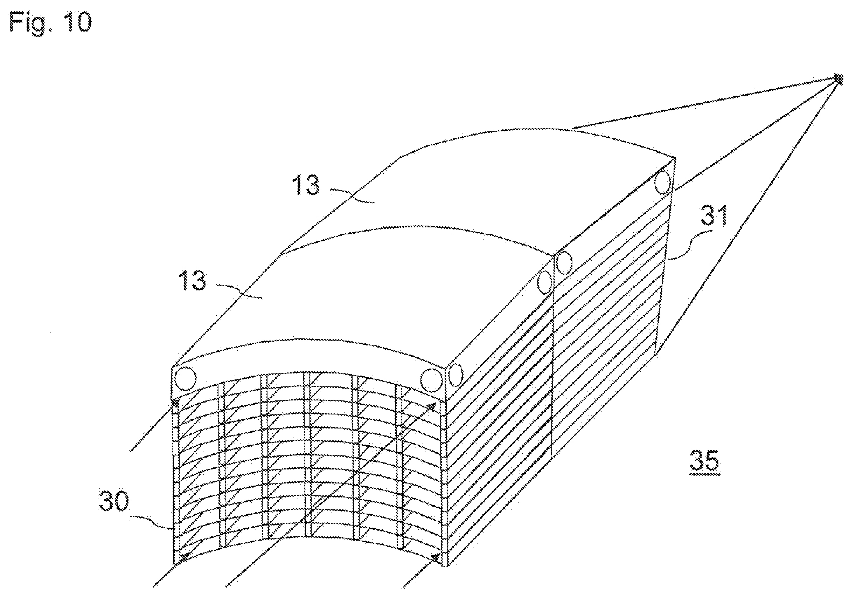

Fig. 10 illustrates the forming of a Wolter-1 element 35 by aligning two mirror plate stacks 30, 31 using X-ray metrology according to an example being useful for the understanding of the invention. To produce a Wolter-1 element 35, two stacks 30, 31 of mirror plates have to be joined together into a tandem configuration. The first stack 30 consists of parabolically shaped plates, the second stack 30 consists of hyperbolically shaped plates. The two stacks are mounted via their base-plates 13 to micro-manipulators into a tandem configuration, i.e. one mirror plate stack 31 is aligned after the other mirror plate stack 30 so that one edge and two corners of the first base plate match a respective edge and the two corners of the second base plate. The alignment of the two mirror plate stacks 30,31 is critical and one of the most stringent parts of the error budget. In particular the longitudinal angle (along the optical axis) defining the kink-angle between the parabola and the hyperbola stacks must be accurate to a small fraction of the required angular resolution of the system. This alignment should be conducted with respect to the X-ray effective positions and figures of the plates. This alignment is therefore done in an X-ray facility using on-line X-ray metrology. The imaging properties of the stack pair is measured in real time and the alignment performed using micro-positioners (not shown) holding the two plate stacks 30, 31 at their base-plates 13. Once the correct alignment is achieved within the specified tolerances, and this is confirmed by the X-ray metrology, the two stacks 30, 31 are permanently joined via their base-plates 13. The doublet now forms a Wolter-1 X-ray optical unit 35.

Since alignment of the two mirror stacks 30, 31 is done using X-ray metrology, the actual performance of the complete system (X-ray optical unit, an Wolter-1 element) is measured in X-rays, and the two stacks 30,31 are accurately aligned with respect to each other. The alignment method intrinsically considers all the mirror plates simultaneously, and performs a direct measurement of the optical performance, including the determination of the most critical kink angle (angle between the parabola and hyperbola) to high accuracy and fidelity. In the prior art, this critical alignment between the parabolic and the hyperbolic plate is done at the time of stacking, using visible optical metrology. This implies some potential error sources: Firstly, X-ray metrology is not possible and therefore the inferior (due to diffraction limitations) visible light metrology must be employed. Secondly, in addition often only a small fraction of the mirror is sampled and accessible to the metrology (limited to the area exposed in the slots of handling tool). Thirdly, after the stacking, in the prior art several further steps are required until the mirror plates are permanently mounted to the optical module structure, with no further possibility to re-align the mirror plates.

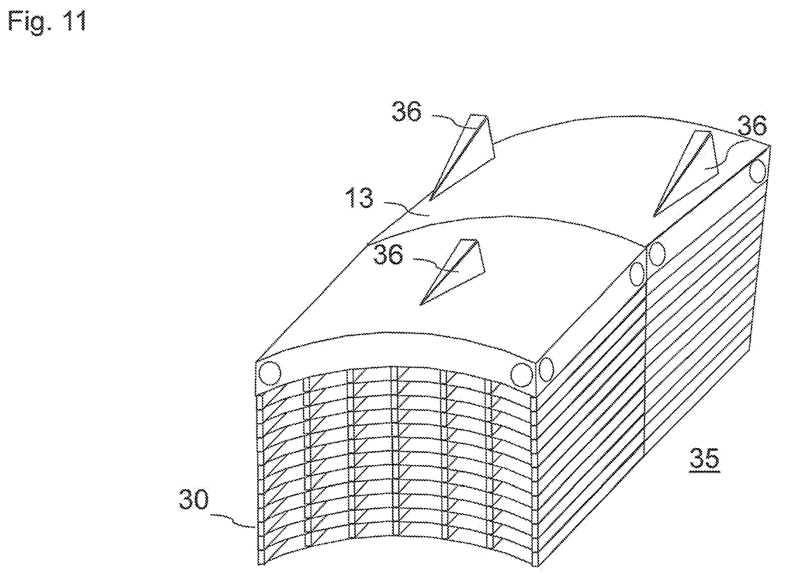

Fig. 11 illustrates an optical unit comprising two mirror plate stacks and interface means for later integration into a telescope system according to an example.

After the permanent joining of the parabola and hyperbola plate stacks, the final optical unit 40 is obtained, wherein the base-plates 13 form a single structural element, holding two stacks of mirror plates in precise alignment. The base plates 13 contain integrated interface elements 36. These interface elements 36 are three rigid fixing means with well defined mechanical attachment holes and surfaces. The resulting optical unit 35 is mounted onto a suitable optical bench using isostatic mounts. By using the base plates of the mirror stacks for later integration into an optical system, e.g. a telescope system, no additional complex structural boxes are required to provide the structural integrity of the optical modules.

## Claims

1. Method for assembling a mirror plate stack (30) comprising a plurality of mirror plates (10) and a base plate (13) onto which the plurality of mirror plates are stacked, said method comprising the steps of
- providing a base plate (13) with a first mirror plate mounted thereto;
- providing a handling tool with a second mirror plate;
- providing a spacer to a first surface of the second mirror plate;
- positioning the handling tool comprising the second mirror plate with the spacer to align the second mirror plate with the first mirror plate, wherein the second mirror plate is aligned relative to the first mirror plate based on a measured position and shape of the first mirror plate to compensate a deviation of the measured position and shape of the first mirror plate from a pre-defined position and shape of the first mirror plate;
- attaching the second mirror plate to the first mirror plate by bonding the spacer to the first mirror plate, wherein the spacer determines a pre-defined distance between the first and the second mirror plates;
- exposing a second surface of the second mirror plate by removing the handling tool from the attached second mirror plate; and
measuring the position and shape of the attached second mirror plate after the second surface has been exposed, **characterized in that** the handling tool is a mandrel, the method further comprising the step of forming the mirror plate to a pre-defined shape by means of the mandrel.

2. Method according to claim 1, wherein the steps according to claim 1 are repeated to stack a plurality of mirror plates onto the base plate so that at least a third mirror plate is attached to the second mirror plate.

3. Method according to one of the claims 1 or 2, further comprising the following steps if a first mirror plate is the first plate to be stacked onto the base plate:
- providing the base plate (13);
- providing the handling tool with the first mirror plate;
- providing a spacer to a first surface of the first mirror plate;
- positioning the handling tool comprising the first mirror plate with the spacer for aligning the first mirror plate with the base plate;
- attaching the first mirror plate to the base plate by bonding the spacer to the base plate;
- exposing a second surface of the first mirror plate by removing the handling tool from the attached first mirror plate; and
- measuring the position and shape of the first mirror plate after the second surface has been exposed.

4. Method according to at least one of the preceding claims, wherein the mirror plates are aligned by means of mechanical and optical alignment methods that utilize reference items (14, 15) provided on the handling tool and the base plate (13).

5. Method according to at least one of the preceding claims, wherein the base plate onto which the mirror plates have been stacked is used as a carrier plate for interfacing the mirror plate stack with an optical bench.

6. Method according to at least one of the preceding claims, wherein in the step of measuring the position and shape of the attached mirror plate after the second surface has been exposed, the position and shape is measured to a required accuracy using Computer generated holography and interferometry.

7. Method according to at least one of the preceding claims, wherein the mirror plates are glass mirror plates and the mandrel is a glass slumping mandrel (11).

8. Method according to at least one of the preceding claims, further comprising the step of removably attaching the second surface of the mirror plate to the handling tool by means of a separation layer wherein a sticking coefficient of the separation layer is set to a value to hold the mirror plate in a fixed position during the step of positioning the handling tool comprising the mirror plate with the spacer means, and wherein after the step of attaching the mirror plate, the value of the sticking coefficient allows a removal of the handling tool from the attached mirror plate.

9. Method according to at least one of the preceding claims, wherein the spacer comprises spacer ribs.

10. Method according to at least one of the preceding claims, wherein the base plate or the spacer means are made of a same material as the mirror plate material.

## Patentansprüche

1. Verfahren zum Aufbauen eines Spiegelplattenstapels (30), umfassend eine Vielzahl von Spiegelplatten (10) und eine Grundplatte (13), auf die die Vielzahl von Spiegelplatten gestapelt werden, wobei das Verfahren folgende Schritte umfasst:
- Bereitstellen einer Grundplatte (13) mit einer darauf montierten ersten Spiegelplatte;
- Bereitstellen eines Handhabungswerkzeugs mit einer zweiten Spiegelplatte;
- Bereitstellen eines Abstandshalters auf einer ersten Oberfläche der zweiten Spiegelplatte;
- Positionieren des Handhabungswerkzeugs, umfassend die zweite Spiegelplatte mit dem Abstandshalter, zum Ausrichten der zweiten Spiegelplatte an der ersten Spiegelplatte, wobei die zweite Spiegelplatte auf der Grundlage einer gemessenen Position und Form der ersten Spiegelplatte relativ zu ersten Spiegelplatte ausgerichtet wird, um eine Abweichung der gemessenen Position und Form der ersten Spiegelplatte von einer vordefinierten Position und Form der ersten Spiegelplatte zu kompensieren.
- Befestigen der zweiten Spiegelplatte an der ersten Spiegelplatte durch Binden des Abstandshalters an die erste Spiegelplatte, wobei der Abstandshalter einen vordefinierten Abstand zwischen der ersten und der zweiten Spiegelplatte bestimmt;
- Freilegen einer zweiten Oberfläche der zweiten Spiegelplatte durch Lösen des Handhabungswerkzeugs von der befestigten zweiten Spiegelplatte; und
Messen der Position und Form der befestigten zweiten Spiegelplatte nach dem Freilegen der zweiten Oberfläche,
**dadurch gekennzeichnet, dass** das Handhabungswerkzeug ein Biegebolzen ist, wobei das Verfahren ferner den Schritt des Formens der Spiegelplatte in eine vordefinierte Form mit Hilfe des Biegebolzens umfasst.

2. Verfahren nach Anspruch 1, wobei die Schritte nach Anspruch 1 wiederholt werden, um eine Vielzahl von Spiegelplatten auf die Grundplatte zu stapeln, so dass mindestens eine dritte Spiegelplatte an der zweiten Spiegelplatte befestigt wird.

3. Verfahren nach einem der Ansprüche 1 oder 2, ferner die folgenden Schritte umfassend, wenn eine erste Spiegelplatte die erste Platte ist, die auf die Grundplatte zu stapeln ist:
- Bereitstellen der Grundplatte (13);
- Bereitstellen des Handhabungswerkzeugs mit der ersten Spiegelplatte;
- Bereitstellen eines Abstandshalters für eine erste Oberfläche der ersten Spiegelplatte;
- Positionieren des Handhabungswerkzeugs, umfassend die erste Spiegelplatte mit dem Abstandshalter, zum Ausrichten der ersten Spiegelplatte an der Grundplatte;
- Befestigen der ersten Spiegelplatte an der Grundplatte durch Binden des Abstandshalters an die Grundplatte;
- Freilegen einer zweiten Oberfläche der ersten Spiegelplatte durch Lösen des Handhabungswerkzeugs von der befestigten ersten Spiegelplatte; und
- Messen der Position und Form der ersten Spiegelplatte nach dem Freilegen der zweiten Oberfläche.

4. Verfahren nach mindestens einem der vorhergehenden Ansprüche, wobei die Spiegelplatten durch mechanische und optische Ausrichtungsverfahren, die am Handhabungswerkzeug und der Grundplatte (13) bereitgestellte Referenzmarken (14, 15) verwenden, ausgerichtet werden.

5. Verfahren nach mindestens einem der vorhergehenden Ansprüche, wobei die Grundplatte, auf die die Spiegelplatten gestapelt wurden, als Trägerplatte zum Koppeln des Spiegelplattenstapels an eine optische Bank dient.

6. Verfahren nach mindestens einem der vorhergehenden Ansprüche, wobei im Schritt des Messens der Position und Form der befestigten Spiegelplatte nach dem Freilegen der zweiten Oberfläche die Position und Form mit Hilfe eines computergenerierten Hologramms und der Interferometrie mit einer erforderlichen Genauigkeit gemessen wird.

7. Verfahren nach mindestens einem der vorhergehenden Ansprüche, wobei die Spiegelplatten Glasspiegelplatten sind und der Biegebolzen ein Glasbiegebolzen (11) ist.

8. Verfahren nach mindestens einem der vorhergehenden Ansprüche, ferner umfassend den Schritt des lösbaren Befestigens der zweiten Spiegelplatte an das Handhabungswerkzeug mit Hilfe einer Trennschicht, wobei ein Klebekoeffizient der Trennschicht auf einen Wert eingestellt ist, um die Spiegelplatte während des Schritts des Positionierens des Handhabungswerkzeugs, umfassend die Spiegelplatte mit dem Abstandshaltemittel, in einer festen Position zu halten, und wobei nach dem Schritt des Befestigens der Spiegelplatte der Wert des Klebekoeffizienten ein Lösen des Handhabungswerkzeugs von der befestigten Spiegelplatte ermöglicht.

9. Verfahren nach mindestens einem der vorhergehenden Ansprüche, wobei der Abstandshalter Abstandshalterrippen umfasst.

10. Verfahren nach mindestens einem der vorhergehenden Ansprüche, wobei die Grundplatte oder das Abstandshaltemittel aus demselben Material hergestellt sind wie das Spiegelplattenmaterial.

## Revendications

1. Procédé d'assemblage d'une pile (30) de plaques-miroirs comprenant une pluralité de plaques-miroirs (10) et une plaque de base (13) sur laquelle est empilée la pluralité de plaques-miroirs, ledit procédé comprenant les étapes consistant à :
- munir une plaque de base (13) d'une première plaque-miroir montée sur celle-ci ;
- munir un outil de manutention d'une deuxième plaque-miroir ;
- disposer un espaceur sur une première surface de la deuxième plaque-miroir ;
- positionner l'outil de manutention comprenant la deuxième plaque-miroir avec l'espaceur pour aligner la deuxième plaque-miroir avec la première plaque-miroir, la deuxième plaque-miroir étant alignée par rapport à la première plaque-miroir sur la base de forme et position mesurées de la première plaque-miroir pour compenser un écart des forme et position mesurées de la première plaque-miroir par rapport à des forme et position prédéfinies de la première plaque-miroir ;
- fixer la deuxième plaque-miroir à la première plaque-miroir par liaison de l'espaceur à la première plaque-miroir, l'espaceur déterminant une distance prédéfinie entre les première et deuxième plaques-miroirs ;
- exposer une seconde surface de la deuxième plaque-miroir par retrait l'outil de manutention de la deuxième plaque-miroir fixée ; et
mesurer les position et forme de la deuxième plaque-miroir fixée après que la seconde surface a été exposée, **caractérisé par le fait que** l'outil de manutention est un mandrin, le procédé comprenant en outre l'étape consistant à mettre en forme la plaque-miroir à une forme prédéfinie au moyen du mandrin.

2. Procédé selon la revendication 1, dans lequel les étapes selon la revendication 1 sont répétées pour empiler une pluralité de plaques-miroirs sur la plaque de base de telle sorte qu'au moins une troisième plaque-miroir est fixée à la deuxième plaque-miroir.

3. Procédé selon l'une des revendications 1 ou 2, comprenant en outre les étapes suivantes si une première plaque-miroir est la première plaque devant être empilée sur la plaque de base :
- disposer la plaque de base (13) ;
- munir l'outil de manutention de la première plaque-miroir ;
- disposer un espaceur sur une première surface de la première plaque-miroir ;
- positionner l'outil de manutention comprenant la première plaque-miroir avec l'espaceur pour aligner la première plaque-miroir avec la plaque de base ;
- fixer la première plaque-miroir à la plaque de base par liaison de l'espaceur à la plaque de base ;
- exposer une seconde surface de la première plaque-miroir par retrait de l'outil de manutention de la première plaque-miroir fixée ; et
- mesurer les position et forme de la première plaque-miroir après que la seconde surface a été exposée.

4. Procédé selon au moins une des revendications précédentes, dans lequel les plaques-miroirs sont alignées au moyen de méthodes d'alignement mécaniques et optiques qui utilisent des éléments de référence (14, 15) disposés sur l'outil de manutention et la plaque de base (13).

5. Procédé selon au moins une des revendications précédentes, dans lequel la plaque de base sur laquelle ont été empilées les plaques-miroirs est utilisée comme plaque de support pour relier la pile de plaques-miroirs à un banc optique.

6. Procédé selon au moins une des revendications précédentes, dans lequel, dans l'étape consistant à mesurer les position et forme de la plaque-miroir fixée après que la seconde surface a été exposée, les position et forme sont mesurées à une précision requise à l'aide d'interférométrie et d'holographie générée par ordinateur.

7. Procédé selon au moins une des revendications précédentes, dans lequel les plaques-miroirs sont des plaques-miroirs en verre et le mandrin est un mandrin (11) de thermoformage sur moule pour le verre.

8. Procédé selon au moins une des revendications précédentes, comprenant en outre l'étape consistant à fixer de façon amovible la seconde surface de la plaque-miroir à l'outil de manutention au moyen d'une couche de séparation, un coefficient d'adhérence de la couche de séparation étant défini à une valeur pour maintenir la plaque-miroir dans une position fixe pendant l'étape consistant à positionner l'outil de manutention comprenant la plaque-miroir avec le moyen espaceur et, après l'étape consistant à fixer la plaque-miroir, la valeur du coefficient d'adhérence permettant un retrait de l'outil de manutention de la plaque-miroir fixée.

9. Procédé selon au moins une des revendications précédentes, dans lequel l'espaceur comprend des nervures d'espacement.

10. Procédé selon au moins une des revendications précédentes, dans lequel la plaque de base ou le moyen espaceur est fait d'un même matériau que le matériau des plaques-miroirs.
